# EUROPÄISCHE PATENTSCHRIFT

(11) **EP 2 933 503 B1**
(45) Veröffentlichungstag und Bekanntmachung des Hinweises auf die Patenterteilung: **16.10.2019**
(21) Anmeldenummer: 15000119.6
(22) Anmeldetag: 17.01.2015
(51) Int. Cl.: B60T 17/02, F15B 21/048, F15B 11/06

(54) **Betriebsverfahren für eine Druckluftaufbereitungseinrichtung für ein Nutzfahrzeug**
Operating method for a compressed air supply device for a commercial vehicle
Procédé de fonctionnement pour dispositif de préparation d'air comprimé pour un véhicule utilitaire

(30) Priorität: 19.03.2014 DE 102014003927
(43) Veröffentlichungstag der Anmeldung: 21.10.2015
(73) Patentinhaber: MAN Truck & Bus SE, 80995 München (DE)
(72) Erfinder: Hofstetter, Thomas, 84048 Mainburg (DE); Kaupert, Oliver, 80995 München (DE)
(74) Vertreter: Kotitschke, Bernd

(56) Entgegenhaltungen:
- DE-A1-102005 057 003
- DE-A1-102008 017 361
- DE-A1-102011 083 614
- DE-B3-102005 057 004
- US-A1- 2013 340 418

## Beschreibung

Die Erfindung betrifft ein Betriebsverfahren für eine insbesondere elektronische Druckluftaufbereitungseinrichtung für ein Nutzfahrzeug, z. B. einen Lastkraftwagen oder einen Omnibus. Die Erfindung betrifft zudem eine Druckluftaufbereitungseinrichtung, die zum Ausführen des Betriebsverfahrens konfiguriert ist.

Zum allgemeinen Stand der Technik kann zunächst die DE 10 2011 083 614 A1 genannt werden, die eine Trocknerschaltung für eine pneumatische Regelvorrichtung eines Fahrzeugs offenbart, umfassend einen Lufttrockner und einen ersten Verdichter, wobei der erste Verdichter dazu ausgebildet ist, in der pneumatischen Regelvorrichtung vorhandene Systemluft zu verdichten, wobei der Lufttrockner, der erste Verdichter und an den ersten Verdichter anschließbare Subsysteme der pneumatischen Regelvorrichtung so angeordnet sind, dass im Betriebsmodus einer geschlossenen Luftversorgung zwischen den Komponenten eines der Subsysteme unter Verwendung des ersten Verdichters beförderte Luft unter Umgehung des Lufttrockners befördert wird.

In Nutzfahrzeugen mit pneumatischem Druckluftsystem sind heute typischerweise Luftpresser installiert, die in irgendeiner Weise vom Förderbetrieb (Arbeitsbetrieb) in einen Energiesparbetrieb (Leerlaufbetrieb) mit reduzierter Förderleistung und dementsprechend reduzierter Leistungsaufnahme schaltbar sind. Die maximale Reduktion geschieht durch Betätigen einer Kupplung zwischen Motorabtrieb und Luftpresser. Eine teilweise Reduktion geschieht durch Betätigung eines Ventils im Luftpresser-Zylinderkopf, wodurch Ansaug- und Verdichtungsraum miteinander verbunden werden und dementsprechend eine stark reduzierte Verdichtung und Luftförderung stattfindet. Die Betätigung des Ventils geschieht üblicherweise über ein pneumatisches Steuersignal oder den Druck in einer Druckluft-führenden Förderleitung. Für letzteren Fall muss, um in den Energiesparmodus zu kommen, von einem nachfolgenden Lufttrockner oder einer elektronischen Luftaufbereitungseinheit ein Ablassventil geöffnet und damit die Förderleitung entlüftet werden. Ein Rückschlagventil stromabwärts des Ablassventils sichert den Druck in der Druckluftanlage. Typischerweise geschieht der Abschaltvorgang, wenn in der Druckluftanlage der maximal zulässige Systemdruck erreicht ist.

Bei einem Druck in der Förderleitung unter z. B. üblicherweise ca. 2 bar schaltet das Ventil im Luftpresser-Zylinderkopf, wodurch Ansaug- und Verdichtungsraum miteinander verbunden werden. Der Luftpresser ist im Energiesparmodus, die reduzierte Fördermenge wird über das Ablassventil ins Freie entlüftet. Fällt nun allerdings der Systemdruck unter einen definierten Mindestdruck, muss das Ablassventil geschlossen werden. Damit steigt der Druck in der Förderleitung langsam wieder an. Es müssen üblicherweise ca. 2 Liter Volumen befüllt werden, nämlich die Förderleitung zwischen Luftpresser und Luftaufbereitungseinheit sowie eine Trockenmittelpatrone der Luftaufbereitungseinheit. Zu Beginn fördert der Luftpresser nur die reduzierte Luftmenge und erst oberhalb ca. 2 bar in der Förderleitung wieder die volle Luftmenge, wenn das Ventil im Luftpresser-Zylinderkopf die Verbindung zwischen Ansaug- und Verdichtungsraum schließt. Erst wenn der Druck in der Förderleitung über den aktuellen Systemdruck angestiegen ist, wird wieder Luft ins Druckluftsystem gefördert. Insbesondere wenn man Schubphasen (z. B. Bergabfahrt) ausnutzen will, vergeht durch die zunächst reduzierte Luftfördermenge relativ viel Zeit, bis man die verfügbare Energie im Druckluftsystem gespeichert hat. Bei kurzen Schubphasen kann es passieren, dass der Druck in der Förderleitung noch nicht über dem Systemdruck ist und somit quasi "ungesichert" über das Ablassventil wieder entlüftet wird und die Energie nicht gespeichert werden kann.

Eine Aufgabe der Erfindung ist es, ein Betriebsverfahren für eine zweckmäßig elektronische Druckluftaufbereitungseinrichtung für ein Nutzfahrzeug zu schaffen, mittels dessen insbesondere auch kurze Schubphasen zur Energiegewinnung oder Energiewandlung ausgenutzt werden können, insbesondere mittels dessen aus einer Leerlauf-/Energiesparphase heraus der Druck in einer Förderleitung schneller aufgebaut werden kann, z. B. über einen Grenzdruck von vorzugsweise ca. 2 bar.

Diese Aufgabe kann mit den Merkmalen des Hauptanspruchs gelöst werden. Vorteilhafte Weiterbildungen der Erfindung können den Unteransprüchen und der nachfolgenden Beschreibung entnommen werden.

Die Erfindung schafft ein Betriebsverfahren für eine insbesondere elektronische Druckluftaufbereitungseinrichtung zum Verbinden mit einer mittels Druckluft aus der Druckluftaufbereitungseinrichtung selbsttätig in einen Leerlaufzustand schaltbaren Luftkompressoreinrichtung (z. B. Kompressor mit sogenanntem selbsttätigen Leerlaufsystem (SLS)) und mit einem Druckluftsystem.

Die Druckluftaufbereitungseinrichtung umfasst eine mit der Luftkompressoreinrichtung verbindbare Fördereinrichtung (z. B. eine Förderleitung), ein erstes Ventil, ein zweites Ventil, ein drittes Ventil und ein viertes Ventil.

Aus einer Leerlaufphase (z. B. Energiesparphase) heraus hin zu einer Förderphase (z. B. Arbeitsphase) werden das erste Ventil und das dritte Ventil in einen gesperrten Zustand geschaltet und das zweite Ventil in einen geöffneten Zustand geschaltet. Dadurch kann Luft aus dem Druckluftsystem über das zweite Ventil und unter Umgehung des vierten Ventils zurück zur Fördereinrichtung geführt werden, um insbesondere den Luftdruck in der Fördereinrichtung aus der Leerlaufphase heraus ausgehend von einer drucklosen Fördereinrichtung aufbauen zu können. Dadurch kann Energie aus Schubphasen (z .B. Bergabfahrt), insbesondere selbst kurzen Schubphasen von z. B. unter 30 Sekunden, unter 15 Sekunden oder sogar unter 5 Sekunden, in Druckluft gewandelt und im Druckluftsystem gespeichert werden.

Es ist möglich, dass aus der Leerlaufphase heraus die Luft aus dem Druckluftsystem über eine Verbindungsleitung in einen Leitungsabschnitt der Druckluftaufbereitungseinrichtung zwischen dem vierten Ventil und einer Luft-Aufbereitungs- oder Luft-Trocknungseinrichtung geführt wird und über die Luft-Aufbereitungs- oder Luft-Trocknungseinrichtung zurück zur Fördereinrichtung geführt wird.

Die Verbindungsleitung zweigt vorzugsweise von einem das zweite Ventil mit dem dritten Ventil verbindenden Leitungsabschnitt ab und mündet zwischen dem vierten Ventil und der Luft-Aufbereitungs- oder Luft-Trocknungseinrichtung.

Die Verbindungsleitung kann ein Drosselventil aufweisen, das ein fünftes Ventil der Druckluftaufbereitungseinrichtung darstellt.

Das zweite Ventil kann aus der Leerlaufphase heraus von einem gesperrten Zustand in einen geöffneten Zustand geschaltet werden und zweckmäßig immer und erst wieder in einen gesperrten Zustand, wenn z. B. mittels eines Drucksensors ein Druckanstieg in einem Leitungsabschnitt zwischen dem zweiten Ventil und dem Druckluftsystem erfasst wird.

Das erste Ventil und/oder das zweite Ventil ist ein vorzugsweise elektrisch schaltbares Schaltventil, vorzugsweise ein Magnetventil.

Es ist möglich, dass Luft aus dem Druckluftsystem über das erste Ventil auf das dritte Ventil wirkt, wenn das erste Ventil geöffnet ist, um das dritte Ventil zu schalten. Das dritte Ventil steht zweckmäßig über einen Leitungsabschnitt mit dem ersten Ventil in Verbindung, um mittels Druckluft aus dem Druckluftsystem und/oder aus dem ersten Ventil geschaltet zu werden.

Ferner kann Luft aus dem Druckluftsystem über das zweite Ventil auf das dritte Ventil wirken, wenn das zweite Ventil geöffnet ist, um das dritte Ventil zu schalten. Das dritte Ventil steht zweckmäßig über einen Leitungsabschnitt mit dem zweiten Ventil in Verbindung, um mittels Druckluft aus dem Druckluftsystem und/oder aus dem zweiten Ventil geschaltet zu werden.

Das dritte Ventil ist folglich zweckmäßig sowohl über das erste Ventil als auch über das zweite Ventil mittels Druckluft aus dem Druckluftsystem ansteuerbar.

Das dritte Ventil ist vorzugsweise ein Luft-Ablassventil zum wahlweisen Sperren oder Ausgeben von Luft aus der Fördereinrichtung und/oder ein Druckluft-schaltbares Ventil, insbesondere Druckluft-schaltbar über Luft aus dem ersten Ventil und dem zweiten Ventil.

Das vierte Ventil ist hingegen vorzugsweise ein Rückschlagventil.

Das vierte Ventil kann z. B. eine Durchfuhr von Luft aus der Fördereinrichtung in Richtung Druckluftsystem erlauben, hingegen eine Durchfuhr von Luft aus dem Druckluftsystem in Richtung Fördereinrichtung verhindern.

Die Druckluftaufbereitungseinrichtung kann einen Drucksensor zur Erfassung des Luftdrucks zwischen dem zweiten Ventil und dem Druckluftsystem aufweisen. Das zweite Ventil kann in Abhängigkeit der mittels des Drucksensors erfassten Werte geschaltet werden.

Zu erwähnen ist, dass das Merkmal "Luft" im Rahmen der Erfindung breit zu verstehen ist und vorzugsweise auch andere Gase umfassen kann.

Zu erwähnen ist ferner, dass das Merkmal "Leerlaufphase" eine "Energiesparphase" umfassen und das Merkmal "Förderphase" eine "Arbeitsphase" umfassen kann.

Die Erfindung ist nicht auf ein Betriebsverfahren beschränkt, sondern umfasst auch eine Druckluftaufbereitungseinrichtung, die konfiguriert ist, um das wie hierin beschriebene Betriebsverfahren auszuführen.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Darstellung einer Druckluftaufbereitungseinrichtung gemäß einer Ausführungsform der Erfindung, in einem Systemzustand "Luftpresser schnell aus Leerlaufphase in Förderphase schalten",
- Figur 2: zeigt die Druckluftaufbereitungseinrichtung der Figur 1, im Systemzustand "För-dern",
- Figur 3: zeigt die Druckluftaufbereitungseinrichtung der Figuren 1 und 2, im Systemzustand "Luftpresser abschalten plus regenerieren", und
- Figur 4: zeigt die Druckluftaufbereitungseinrichtung der Figuren 1 bis 3, im Systemzustand "Luftpresser abschalten".

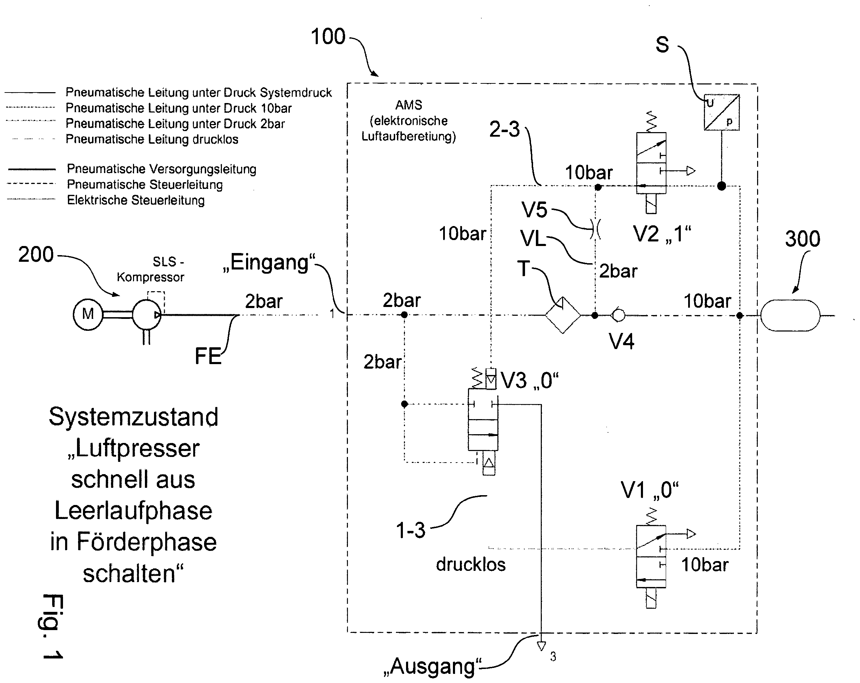

Figur 1 zeigt eine elektronische Druckluftaufbereitungseinrichtung 100 gemäß einer Ausführungsform der Erfindung. Die Druckluftaufbereitungseinrichtung 100 dient zum Verbinden einerseits mit einer mittels Druckluft aus der Druckluftaufbereitungseinrichtung 100 selbsttätig in einen Leerlaufzustand schaltbaren Luftkompressoreinrichtung 200 (z. B. Luftpresser mit sogenanntem selbsttätigen Leerlaufsystem SLS; Luftpresser kann sich selbsttätig in Leerlauf schalten) und zum Verbinden andererseits mit einem Druckluftsystem 300. Die Druckluftaufbereitungseinrichtung 100 und die Luftkompressoreinrichtung 200 sind über eine Fördereinrichtung (Förderleitung) FE miteinander verbunden. Die Fördereinrichtung FE führt über einen Eingang 1 in die Druckluftaufbereitungseinrichtung 100.

Die Druckluftaufbereitungseinrichtung 100 umfasst ein erstes Ventil V1 (elektrisch schaltbares Magnetventil), ein zweites Ventil V2 (elektrisch schaltbares Magnetventil), ein drittes Ventil V3 (Luft-Ablassventil), ein viertes Ventil V4 (Rückschlagventil) und ein fünftes Ventil V5 (Drosselventil). Das dritte Ventil V3 dient zum druckluftgesteuerten, wahlweisen Sperren oder Ausgeben von Luft aus der Fördereinrichtung FE. Die mittels des dritten Ventils V3 auszugebende Luft kann über einen Ausgang 3 aus der Druckluftaufbereitungseinrichtung 100 hinausgeführt werden.

Die Druckluftaufbereitungseinrichtung 100 umfasst eine Luft-Aufbereitungs-Einrichtung T, z. B. eine Luft-Trocknungs-Einrichtung, zur Regeneration insbesondere trockener Luft aus dem Druckluftsystem 300.

Das dritte Ventil V3 steht über einen Leitungsabschnitt 1-3 mit dem ersten Ventil V1 in Verbindung, um mittels Druckluft aus dem ersten Ventil V1 geschaltet zu werden. Luft aus dem Druckluftsystem 300 kann über das erste Ventil V1 auf das dritte Ventil V3 wirken, wenn das erste Ventil V1 geöffnet ist, um das dritte Ventil V3 zu schalten.

Das dritte Ventil V3 steht über einen Leitungsabschnitt 2-3 mit dem zweiten Ventil V2 in Verbindung, um mittels Druckluft aus dem zweiten Ventil V2 geschaltet zu werden. Luft aus dem Druckluftsystem 300 kann über das zweite Ventil V2 auf das dritte Ventil V3 wirken, wenn das zweite Ventil V2 geöffnet ist, um das dritte Ventil V3 zu schalten.

Eine Verbindungsleitung VL zweigt von dem Leitungsabschnitt 2-3 ab und mündet zwischen dem vierten Ventil V4 und der Luft-Aufbereitungs-Einrichtung T. Die Verbindungsleitung VL umfasst das fünfte Ventil V5.

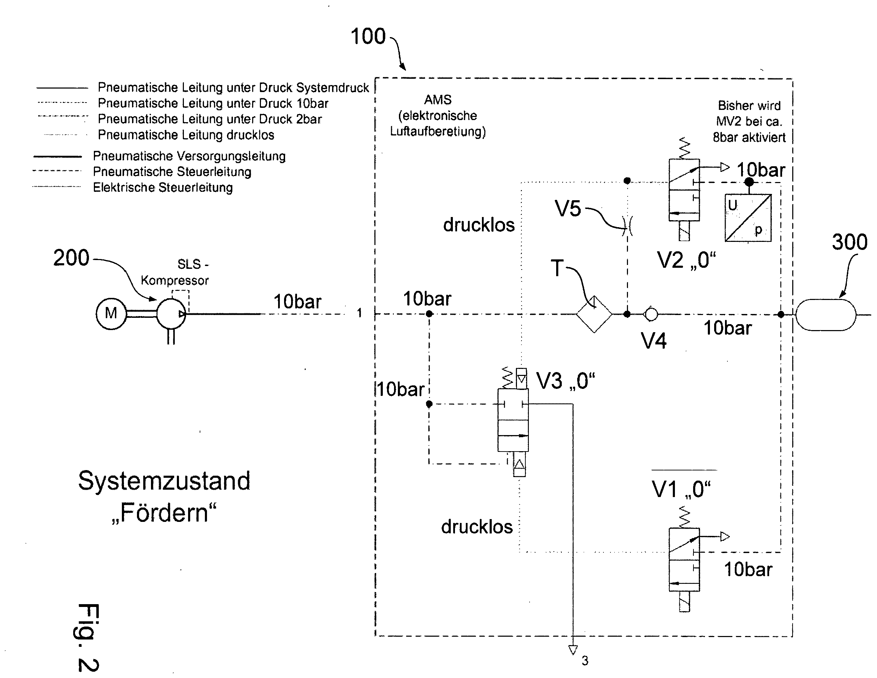

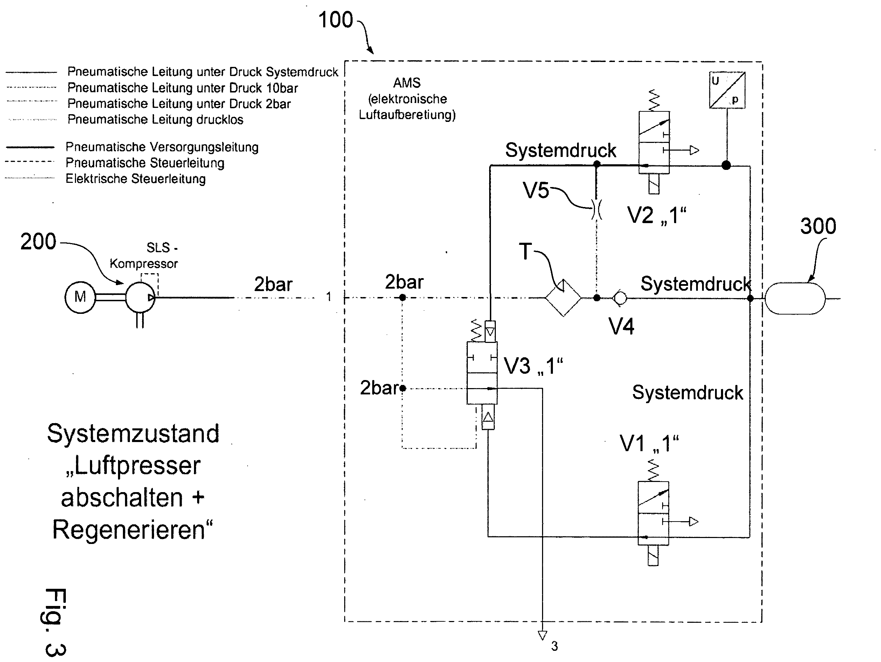

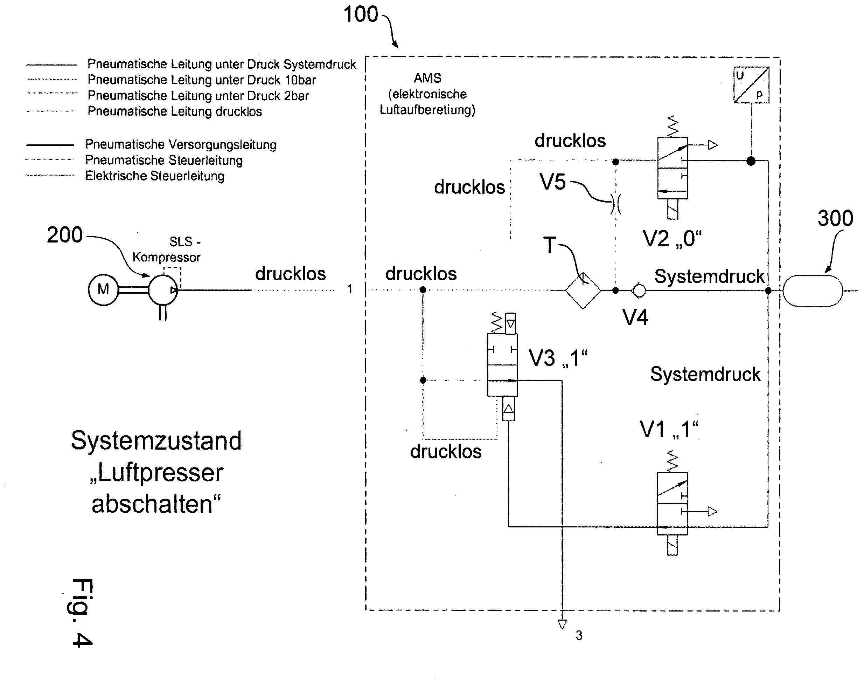

Die Betriebsweise des in Figur 1 gezeigten Systems wird nachfolgend unter Bezugnahme auf die Figuren 1 bis 4 beschrieben, wobei Figur 1 den Systemzustand "Luftpresser 200 schnell aus der Leerlaufphase in die Förderphase schalten", Figur 2 den Systemzustand "Fördern", Figur 3 den Systemzustand "Luftpresser 200 abschalten plus regenieren" und Figur 4 den Systemzustand "Luftpresser 200 abschalten" zeigt.

Ausgehend von einer Leerlauf- bzw. Energiesparphase (Figur 4) hin zu einer Förder- bzw. Arbeitsphase (Figur 2) wird das erste Ventil V1 und das dritte Ventil V3 in einen gesperrten Zustand "0" geschaltet und das zweite Ventil V2 in einen geöffneten Zustand "1" geschaltet (Figur 1), so dass Luft aus dem Druckluftsystem 300 über das zweite Ventil V2 und unter Umgehung des vierten Ventils V4 - also parallel zum vierten Ventil V4 - zurück zur Fördereinrichtung FE geführt wird, wodurch die zunächst drucklose Fördereinrichtung FE mit Druck beaufschlagt wird. Somit kann aus der Leerlaufphase heraus der Druck in der Fördereinrichtung FE schneller aufgebaut werden, um die (energiearme) Druckluftförderung während insbesondere kurzer Schubphasen des Nutzfahrzeugs besser ausnutzen zu können. Selbst Schubphasen von z. B. unter 30 s, unter 15 s oder sogar unter 5 s können energiegewinnend genutzt werden. Um trockene Luft aus dem Druckluftsystem 300 zu regenerieren, wird hingegen das zweite Ventil V2 bei geöffnetem dritten Ventil V3 geöffnet, wodurch trockene Luft aus dem Druckluftsystem 300 parallel zum vierten Ventil V4 über die Verbindungsleitung VL und das fünfte Ventil V5 durch die Luft-Aufbereitungs-Einrichtung T zur Regeneration derselben strömen kann (Figur 3).

Das System sieht also vor, Luft aus dem Druckluftsystem 300 in die Fördereinrichtung FE zurückzuspeisen. Das kann eben dadurch realisiert werden, dass bei geschlossenem dritten Ventil 3 das zweite Ventil V2 geöffnet wird, so dass Luft in die Fördereinrichtung FE strömt und der Druck schneller über einen Grenzdruck von z. B. üblicherweise ca. 2 bar steigen kann. Daraus folgt, dass die Luftkompressoreinrichtung 200 schneller wieder die volle Luftmenge fördern kann und der Druck in der Fördereinrichtung FE schneller den Systemdruck übersteigen kann. Die in einer Schubphase frei verfügbare Energie kann schneller im Druckluftsystem 300 gespeichert werden, selbst dann, wenn die Schubphase relativ kurz ist.

Das System ermöglicht folglich die Ausnutzung insbesondere kurzer Schubphasen zur Gewinnung (Rückgewinnung) frei verfügbarer Energie innerhalb der Schubphasen bzw. zur Wandlung frei verfügbarer Energie innerhalb der Schubphasen in Druckluft und anschließender Speicherung im Druckluftsystem 300. Durch Einspeisen von Druckluft aus dem Druckluftsystem 300 in die Fördereinrichtung FE kann die Luftkompressoreinrichtung 200 schneller aus einer Leerlaufphase in eine (volle) Förderphase versetzt werden.

Das zweite Ventil V2 wird aus der Leerlaufphase heraus von einem gesperrten Zustand "0" in einen geöffneten Zustand "1" geschaltet und zwar zweckmäßig immer und erst dann, wenn zwischen dem Druckluftsystem 300 und dem zweiten Ventil V2 ein Druckanstieg mittels eines Drucksensors S sensiert wird.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deswegen in den Schutzbereich fallen. Darüber hinaus beansprucht die Erfindung Schutz für den Gegenstand und die Merkmale der Unteransprüche, unabhängig von den in Bezug genommenen Merkmalen und Ansprüchen.

### Bezugszeichenliste

- 100: Druckluftaufbereitungseinrichtung
- 200: Luftkompressoreinrichtung (Luftpresser)
- 300: Druckluftsystem
- V1: Erstes Ventil
- V2: Zweites Ventil
- V3: Drittes Ventil
- V4: Viertes Ventil
- V5: Fünftes Ventil
- FE: Fördereinrichtung (Förderleitung)
- T: Luft-Aufbereitungs- oder Luft-Trocknungseinrichtung
- VL: Verbindungsleitung
- 1-3: Verbindungsleitung (erstes Ventil - drittes Ventil)
- 2-3: Verbindungsleitung (zweites Ventil - drittes Ventil)
- S: Drucksensor
- "0": Gesperrter Zustand
- "1": Geöffneter Zustand
- M: Motor

## Patentansprüche

1. Betriebsverfahren für eine vorzugsweise elektronische Druckluftaufbereitungseinrichtung (100) zum Verbinden einerseits mit einer mittels Druckluft aus der Druckluftaufbereitungseinrichtung (100) selbsttätig in einen Leerlaufzustand schaltbaren Luftkompressoreinrichtung (200) und andererseits mit einem Druckluftsystem (300), wobei die Druckluftaufbereitungseinrichtung (100) eine mit der Luftkompressoreinrichtung (200) verbindbare Fördereinrichtung (FE), ein erstes Ventil (V1), ein zweites Ventil (V2), ein drittes Ventil (V3) und ein viertes Ventil (V4) aufweist, wobei aus einer Leerlaufphase heraus hin zu einer Förderphase das erste Ventil (V1) und das dritte Ventil (V3) in einen gesperrten Zustand ("0") geschaltet werden und das zweite Ventil (V2) in einen geöffneten Zustand ("1") geschaltet wird, so dass Luft aus dem Druckluftsystem (300) über das zweite Ventil (V2) und unter Umgehung des vierten Ventils (V4) zurück zur Fördereinrichtung (FE) geführt wird.

2. Betriebsverfahren nach Anspruch 1, wobei die Luft aus dem Druckluftsystem (300) über eine Verbindungsleitung (VL) in einen Leitungsabschnitt der Druckluftaufbereitungseinrichtung (100) zwischen dem vierten Ventil (V4) und einer Luft-Aufbereitungs- oder Luft-Trocknungseinrichtung (T) geführt wird und über die Luft-Aufbereitungs- oder Luft-Trocknungseinrichtung (T) zurück zur Fördereinrichtung (FE).

3. Betriebsverfahren nach Anspruch 2, wobei die Verbindungsleitung (VL) ein Drosselventil (V5) aufweist.

4. Betriebsverfahren nach einem der vorhergehenden Ansprüche, wobei das zweite Ventil (V2) aus der Leerlaufphase heraus von einem gesperrten Zustand ("0") in einen geöffneten Zustand ("1") geschaltet wird und wieder in einen gesperrten Zustand ("0") geschaltet wird, wenn ein Druckanstieg zwischen dem zweiten Ventil (V2) und dem Druckluftsystem (300) erfasst wird.

5. Betriebsverfahren nach einem der vorhergehenden Ansprüche, wobei das erste Ventil (V1) und/oder das zweite Ventil (V2) ein elektrisch schaltbares Schaltventil ist, vorzugsweise ein Magnetventil.

6. Betriebsverfahren nach einem der vorhergehenden Ansprüche, wobei Luft aus dem Druckluftsystem (300) über das erste Ventil (V1) auf das dritte Ventil (V3) wirkt, wenn das erste Ventil (V1) geöffnet (1") ist, um das dritte Ventil (V3) zu schalten.

7. Betriebsverfahren nach einem der vorhergehenden Ansprüche, wobei Luft aus dem Druckluftsystem (300) über das zweite Ventil (V2) auf das dritte Ventil (V3) wirkt, wenn das zweite Ventil (V2) geöffnet (1") ist, um das dritte Ventil (V3) zu schalten.

8. Betriebsverfahren nach einem der vorhergehenden Ansprüche, wobei das dritte Ventil (V3) ein Luft-Ablassventil zum wahlweisen Sperren oder Ausgeben von Luft aus der Fördereinrichtung (FE) ist und/oder druckluftschaltbar ist, insbesondere über Luft aus dem Druckluftsystem (300).

9. Betriebsverfahren nach einem der vorhergehenden Ansprüche, wobei das vierte Ventil (V4) ein Rückschlagventil ist.

10. Betriebsverfahren nach einem der vorhergehenden Ansprüche, wobei das vierte Ventil (V4) eine Durchfuhr von Luft aus der Fördereinrichtung (FE) zu dem Druckluftsystem (300) erlaubt und eine Durchfuhr von Luft aus dem Druckluftsystem (300) zu der Fördereinrichtung (FE) verhindert.

11. Betriebsverfahren nach einem der vorhergehenden Ansprüche, wobei die Druckluftaufbereitungseinrichtung (100) einen Drucksensor (S) zur Erfassung des Luftdrucks zwischen dem zweiten Ventil (V2) und dem Druckluftsystem (300) aufweist und vorzugsweise das zweite Ventil (V2) in Abhängigkeit der mittels des Drucksensors (S) erfassten Werte geschaltet wird.

12. Anordnung, umfassend eine Druckluftaufbereitungseinrichtung (100), eine selbsttätig in einen Leerlaufzustand schaltbare Luftkompressoreinrichtung (200) und ein Druckluftsystem (300) wobei die Druckluftaufbereitungseinrichtung (100) eine mit der Luftkompressoreinrichtung (200) verbindbare Fördereinrichtung (FE), ein erstes Ventil (V1), ein zweites Ventil (V2), ein drittes Ventil (V3) und ein viertes Ventil (V4) aufweist, und wobei die Druckluftaufbereitungseinrichtung (100)konfiguriert ist, das Betriebsverfahren nach einem der vorhergehenden Ansprüche auszuführen.

## Claims

1. Operating method for a preferably electronic compressed air processing device (100) for connecting on the one hand to an air compressor (200) that is automatically switchable to a no-load state by compressed air from the compressed air processing device (100) and on the other hand to a compressed air system (300), wherein the compressed air processing device (100) comprises a delivery device (FE) for connection to the air compressor (200), a first valve (V1), a second valve (V2), a third valve (V3) and a fourth valve (V4), wherein from a no-load phase to a delivery phase the first valve (V1) and the third valve (V3) are switched to a blocked state ("0") and the second valve (V2) is switched to an opened state ("1") so that air from the compressed air system (300) is fed back to the delivery device (FE) via the second valve (V2) and while bypassing the fourth valve (V4).

2. Operating method according to Claim 1, wherein the air from the compressed air system (300) is fed by means of a connecting line (VL) into a line segment of the compressed air processing device (100) between the fourth valve (V4) and an air preparation or air drying device (T) and via the air preparation device or air drying device (T) back to the delivery device (FE) .

3. Operating method according to Claim 2, wherein the connecting line (VL) comprises a choke valve (V5).

4. Operating method according to any one of the preceding claims, wherein the second valve (V2) is switched out of the no-load phase from a blocked state ("0") to an opened state ("1") and back into a blocked state ("0") if a pressure rise is detected between the second valve (V2) and the compressed air system (300) .

5. Operating method according to any one of the preceding claims, wherein the first valve (V1) and/or the second valve (V2) is an electrically switchable switching valve, preferably a solenoid valve.

6. Operating method according to any one of the preceding claims, wherein air from the compressed air system (300) acts via the first valve (V1) on the third valve (V3) if the first valve (V1) is opened (1") in order to switch the third valve (V3).

7. Operating method according to any one of the preceding claims, wherein air from the compressed air system (300) acts via the second valve (V2) on the third valve (V3) if the second valve (V2) is opened (1") in order to switch the third valve (V3).

8. Operating method according to any one of the preceding claims, wherein the third valve (V3) is an air discharge valve for selectively blocking or outputting air from the delivery device (FE) and/or is switchable by compressed air, especially by means of air from the compressed air system (300).

9. Operating method according to any one of the preceding claims, wherein the fourth valve (V4) is a non-return valve.

10. Operating method according to any one of the preceding claims, wherein the fourth valve (V4) enables a passage of air from the delivery device (FE) to the compressed air system (300) and prevents a passage of air from the compressed air system (300) to the delivery device (FE).

11. Operating method according to any one of the preceding claims, wherein the compressed air processing device (100) comprises a pressure sensor (S) for detecting the air pressure between the second valve (V2) and the compressed air system (300) and the second valve (V2) is preferably switched depending on the values detected by means of the pressure sensor (S) .

12. Arrangement, comprising a compressed air processing device (100) an air compressor (200) that is automatically switchable to a no-load state and a compressed air system (300), wherein the compressed air processing device (100) comprises a delivery device (FE) for connection to the air compressor (200), a first valve (V1), a second valve (V2), a third valve (V3) and a fourth valve (V4), and wherein the compressed air processing device (100) is configured to carry out the operating method according to any one of the preceding claims.

## Revendications

1. Procédé de fonctionnement pour un dispositif de préparation d'air comprimé (100), de préférence électronique, destiné à être relié d'un côté à un dispositif compresseur d'air (200) pouvant être commuté automatiquement dans un état de marche à vide au moyen d'air comprimé en provenance du dispositif de préparation d'air comprimé (100) et, de l'autre côté, à un système d'air comprimé (300), le dispositif de préparation d'air comprimé (100) possédant un dispositif de circulation (FE) pouvant être relié au dispositif compresseur d'air (200), une première valve (V1), une deuxième valve (V2), une troisième valve (V3) et une quatrième valve (V4), lors du passage d'une phase de marche à vide à une phase de circulation, la première valve (V1) et la troisième valve (V3) étant commutées dans un état bloqué (« 0 ») et la deuxième valve (V2) étant commutée dans un état ouvert (« 1 »), de sorte que l'air est acheminé hors du système d'air comprimé (300) par le biais de la deuxième valve (V2) et revient dans le dispositif de circulation (FE) en contournant la quatrième valve (V4).

2. Procédé de fonctionnement selon la revendication 1, l'air issu du système d'air comprimé (300) étant acheminé par le biais d'une conduite de liaison (VL) dans une portion de conduite du dispositif de préparation d'air comprimé (100) entre la quatrième valve (V4) et un dispositif de préparation d'air ou de séchage d'air (T), puis retournant au dispositif de circulation (FE) en passant par le dispositif de préparation d'air ou de séchage d'air (T).

3. Procédé de fonctionnement selon la revendication 2, la conduite de liaison (VL) possédant une valve d'étranglement (V5).

4. Procédé de fonctionnement selon l'une des revendications précédentes, la deuxième valve (V2), depuis la phase de marche à vide, étant commutée d'un état bloqué (« 0 ») à un état ouvert (« 1 ») puis de nouveau dans un état bloqué (« 0 ») lorsqu'une augmentation de pression est détectée entre la deuxième valve (V2) et le système d'air comprimé (300).

5. Procédé de fonctionnement selon l'une des revendications précédentes, la première valve (V1) et/ou la deuxième valve (V2) étant une valve de commande à commutation électrique, de préférence une électrovalve.

6. Procédé de fonctionnement selon l'une des revendications précédentes, l'air issu du système d'air comprimé (300) agissant sur la troisième valve (V3) par le biais de la première valve (V1) lorsque la première valve (V1) est ouverte (« 1 ») afin de commuter la troisième valve (V3).

7. Procédé de fonctionnement selon l'une des revendications précédentes, l'air issu du système d'air comprimé (300) agissant sur la troisième valve (V3) par le biais de la deuxième valve (V2) lorsque la deuxième valve (V2) est ouverte (« 1 ») afin de commuter la troisième valve (V3).

8. Procédé de fonctionnement selon l'une des revendications précédentes, la troisième valve (V3) étant une valve d'évacuation d'air destinée à bloquer ou délivrer sélectivement l'air en provenance du dispositif de circulation (FE) et/ou peut être commutée à l'air comprimé, notamment par le biais de l'air issu du système d'air comprimé (300).

9. Procédé de fonctionnement selon l'une des revendications précédentes, la quatrième valve (V4) étant un clapet anti-retour.

10. Procédé de fonctionnement selon l'une des revendications précédentes, la quatrième valve (V4) permettant un passage de l'air depuis le dispositif de circulation (FE) vers le système d'air comprimé (300) et empêchant un passage de l'air depuis le système d'air comprimé (300) vers le dispositif de circulation (FE).

11. Procédé de fonctionnement selon l'une des revendications précédentes, le dispositif de préparation d'air comprimé (100) possédant un capteur de pression (S) destiné à détecter la pression d'air entre la deuxième valve (V2) et le système d'air comprimé (300) et la deuxième valve (V2) étant de préférence commutée en fonction des valeurs acquises au moyen du capteur de pression (S).

12. Arrangement comprenant un dispositif de préparation d'air comprimé (100), un dispositif compresseur d'air (200) pouvant être commuté automatiquement dans un état de marche à vide et un système d'air comprimé (300), le dispositif de préparation d'air comprimé (100) possédant un dispositif de circulation (FE) pouvant être relié au dispositif compresseur d'air (200), une première valve (V1), une deuxième valve (V2), une troisième valve (V3) et une quatrième valve (V4), et le dispositif de préparation d'air comprimé (100) étant configuré pour mettre en oeuvre le procédé de fonctionnement selon l'une des revendications précédentes.
